# EUROPEAN PATENT SPECIFICATION

(11) **EP 2 477 311 B1**
(45) Date of publication and mention of the grant of the patent: **05.03.2014**
(21) Application number: 11151242.2
(22) Date of filing: 18.01.2011
(51) Int. Cl.: H02K 1/20, H02K 7/18, H02K 9/19

(54) **Generator, in particular for a wind turbine**
Generator, insbesondere für eine Windturbine
Générateur, en particulier pour éolienne

(43) Date of publication of application: 18.07.2012
(73) Proprietor: Siemens Aktiengesellschaft, 80333 München (DE)
(72) Inventor: Besnerais, Jean Le, 59370, Mons en Baroeul (FR)

(56) References cited:
- EP-A1- 1 257 037
- EP-A1- 2 182 619
- EP-A1- 2 273 653
- EP-A2- 1 586 769
- US-A- 1 494 715
- US-A- 3 789 252
- US-A1- 2005 082 836

## Description

The present invention relates to a generator, in particular for a wind turbine, comprising an outer rotor with a number of permanent magnets arranged in circumferential direction and an inner stator with a stator lamination and a cooling means, wherein the stator is provided with a liquid cooling means.

Wind turbines are provided with a rotor shaft which is connected to a permanent magnet generator producing electricity during movement of a rotor relative to a stator. The stator comprises a number of coils and a stator lamination so that an electric voltage is induced when the rotor is turned.

US 2005/0082836 A1 discloses a wind turbine, comprising a generator with an outer rotor with a number of permanent magnets arranged in circumferential direction and an inner stator with a stator lamination and a cooling means, wherein the stator is provided with a liquid cooling.

In US 3 789 252 A a stator for large rotating electrical machines is proposed. The stator is formed as a two-part stator wherein a cooling medium flows through an axial intermediate space between an inner and an outer stator.

From EP 2 273 653 A1 a generator with a stator is known wherein the lamination is cooled by a liquid cooling. The generator is suitable for being used in a wind turbine.

Inefficiency of electrical machines like generators mainly comes from electromagnetic losses (Joule losses, iron losses, copper losses, ...) that are released as heat. In permanent magnet generators these losses mainly come from copper losses in stator conductors resulting in a high temperature in coils and especially in end-windings that are surrounded by air. The stator winding temperature must be kept low enough to avoid a decrease of the insulation lifetime, therefore an efficient cooling system is of prime importance.

It is therefore an object of the present invention to provide a generator, in particular for a wind turbine, with an efficient cooling means. According to the present invention this object is achieved with a generator with the features of claim 1.

The invention is based on the idea that a very efficient cooling of the stator can be achieved by using a liquid cooling means so that the stator insulation can be kept at a temperature which is low enough in order to avoid a decrease of the insulation lifetime.

The stator lamination of the inventive generator is provided with an airduct so that room for accommodating cooling pipes of the liquid cooling is provided. The airduct is a central airduct, i. e. it is disposed in the centre of the stator lamination. Accordingly the cooling pipes are disposed in the airduct which leads to the advantage that connections of the cooling pipes are easily accessible and serviceable.

The cooling pipes extend radially from the central airduct. In this embodiment a central inlet and a central outlet is envisaged whereby a cooling liquid flows from the central airduct radially so that all parts of the stator lamination can be cooled efficiently.

In order to use the available space best the cooling pipes may be arranged alternately in the central airduct. Accordingly a cooling pipe which runs from the central airduct e. g. to the left side of the stator is disposed next to a cooling pipe which runs to the right side of the stator. In this manner the stator lamination can be cooled uniformly.

In the inventive generator it may be envisaged that cooling pipes are staggered. In this regard the term "staggered" means that cooling pipes which run to the left side of the stator and cooling pipes which run to the right side of the stator are axially overlapping in the airduct. Such an arrangement is very effective with regard to the needed space.

According to a preferred embodiment of the inventive generator the cooling pipe may be an extruded pipe. The extruded pipe can e. g. be made out of aluminium in order to achieve a very effective heat transfer.

In the inventive generator the cooling pipe may comprise an inner wall separating the inlet circuit and the outlet circuit. The inner wall makes is possible to use a cooling pipe with small dimensions which can easily be installed in a recess of the stator lamination.

It is preferred that neighbouring cooling pipes are connected by a T connection, which is connected to an inlet or an outlet manifold. In this way successive cooling pipes can be linked to a common manifold so that all connections are accessible.

In the inventive generator it is preferred that the cooling pipes are laterally confined by finger plates of the stator, whereby preferably a space is provided between an outer end of the cooling pipes and the finger plates. This space enables a thermal expansion of the cooling pipes so that a contact between the outer end of the cooling pipes and the finger plates is avoided.

Further the invention relates to a wind turbine.

The inventive wind turbine comprises a generator as described above.

The invention and its underlaying principle will be better understood when consideration is given to the following detailed description of preferred embodiments.

In the accompanying drawings:
- Fig. 1: is a cross-sectional view of an inventive generator,
- Fig. 2: is a top view of the stator of the inventive generator of fig. 1; and
- Fig. 3: shows a detail of the cooling pipes;
- Fig. 4: is a cross-sectional view of a cooling pipe of a second embodiment; and
- Fig. 5: is a top view of the cooling pipe of fig. 4.

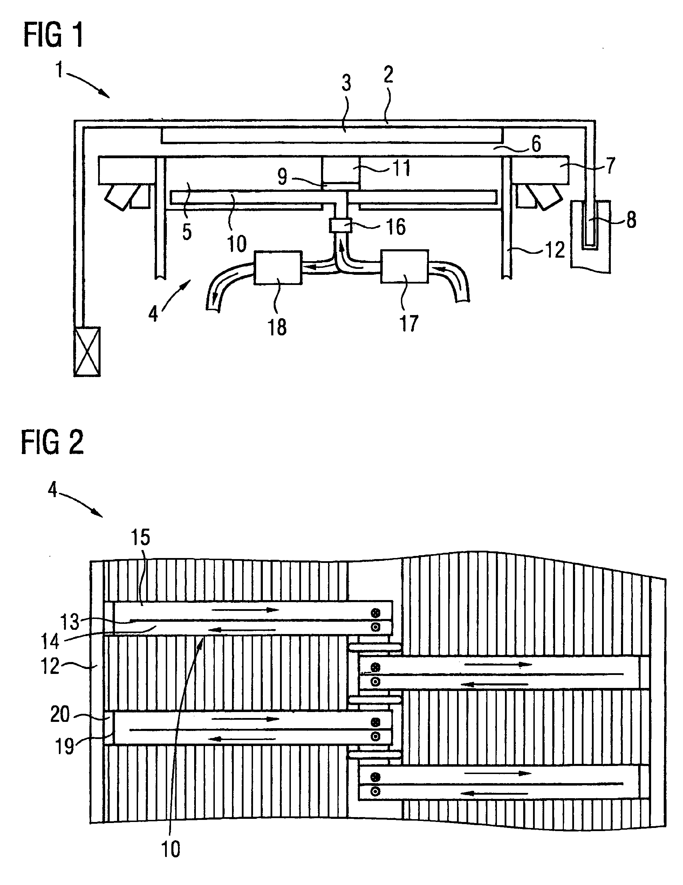

Fig. 1 is a schematic view of a detail of a generator for a wind turbine. The generator 1 comprises an outer rotor 2 with a number of permanent magnets 3 arranged in circumferential direction. Rotor 2 has the shape of a cylinder and the permanent magnets 3 are disposed on the inner surface of the rotor 2.

Generator 1 comprises a stator 4 disposed inside rotor 2 with a stator lamination 5 having a circular shape. Between the outer side of the stator lamination 5 and the inner side of the permanent magnets 3 an air gap 6 is provided. End windings 7 of the stator 4 are extending radially on both sides. A brake disc 8 is provided in order to impose a braking force so that the speed of the rotor 2 can be controlled.

Rotor 2 is connected to a rotor shaft (not shown), which is connected to rotor blades of the wind turbine. When the rotor blades are turned an electric current is induced in the stator.

In order to provide an efficient cooling for the stator conductors, in particular for coils and the insulation a cooling means in the form of a liquid cooling is provided. The liquid cooling comprises a central airduct 9 accomodating cooling pipes 10.

The stator lamination 5 is divided into two parts, which are separated by a spacer 11. Cooling pipes 10 are extending radially from the central airduct 9 and are inserted in recesses of the stator lamination 5. The spacer 11 makes room for the cooling pipes 10, in particular for bent parts of the cooling pipes 10. In order to avoid any piping turn to be outside finger plates 12 (pressure plates) extruded aluminium pipes are used as cooling pipes 10, comprising an inner wall 13 in longitudinal direction which separates an inlet circuit 14 from an outlet circuit 15, as is depicted in fig. 2. The input and the output of cooling pipe 10 is at the same place and cooling pipes 10 are placed in staggered rows in order to take less space.

Neighbouring cooling pipes 10 are connected by a T connection 16, which is connected to an inlet manifold 17 and an outlet manifold 18. Between the outer end 19 and finger plates 12 a space 20 is provided to allow for thermal expansion of cooling pipe 10.

T connections 16 between successive cooling pipes 10 link the pipes to the manifold 17, 18 with plastic pipes, therefore all connections are easily accessible and serviceable.

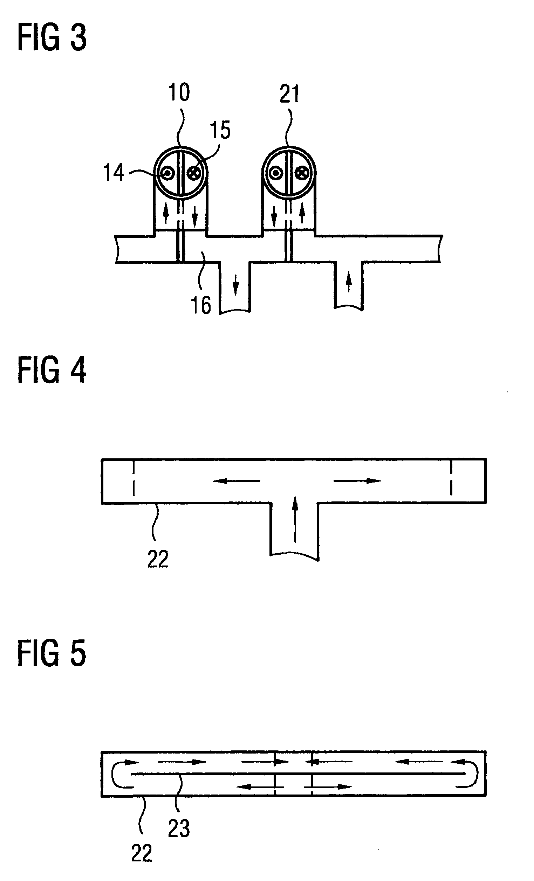

Fig. 3 shows a detail of a cooling pipe 10. In the sectional view of fig. 3 it can be seen that the cooling pipe 10 has a circular cross-section and is divided by an inner wall 13. One part of the cooling pipe 10 serves as inlet circuit 14, the other part serves as outlet circuit 15. Neighbouring cooling pipes 10, 21 are connected by the T connection 16 which is connected to an outlet manifold.

The advantage of the generator 1 is that the central airduct 9 allows servicing all connections, including cooling pipes 10, 21 and T connections 16. The staggered pipes as shown in fig. 2 allow having a smaller airduct so that losses are decreased.

Fig. 4 is a cross-sectional view of a cooling pipe 22 of a second embodiment of a generator.

As can be seen in fig. 4 cooling pipe 22 has a T shape but is not staggered in contrast to the embodiment shown in fig. 1 to 3. Cooling pipe 23 comprises an inlet from which a left pipe part and a right pipe part are branching. In the top view of fig. 5 one can see that cooling pipe 22 comprises an inner wall 23 which separates an inlet circuit from an outlet circuit.

## Claims

1. A generator (1), in particular for a wind turbine, comprising an outer rotor (2) with a number of permanent magnets (3) arranged in circumferential direction and an inner stator (4) with a stator lamination (5) and a cooling means, wherein the stator (4) is provided with a liquid cooling means, **characterised in that** the stator lamination (5) is divided into two parts between which a central airduct (9), accommodating cooling pipes (10, 21, 22) of the liquid cooling means, is provided wherein said cooling pipes (10, 21, 22) run in the stator lamination (5) from the central airduct (9) to the stator finger plates (12) which laterally confine them and wherein inlet and outlet parts of the cooling pipes are disposed in the central airduct (9) from which they extend radially in order to be connected to a central inlet (17) and to a central outlet (18) of the liquid cooling means.

2. A generator according to claim 1, **characterised in that** cooling pipes (10, 21) are arranged alternately in the central airduct (9), such that a cooling pipe which runs from the central airduct to the left side of the stator is disposed next to a cooling pipe which runs to the right side of the stator.

3. A generator according to claim 1 or 2, **characterised in that** cooling pipes (10, 21) are staggered such that cooling pipes (10, 21) which run to the left side of the stator and cooling pipes (10, 21) which run to the right side of the stator are axially overlapping in the airduct (9).

4. A generator according to any of the preceding claims, **characterised in that** a cooling pipe (10, 21, 22) comprises an inlet circuit and an outlet circuit.

5. A generator according to claim 4, **characterised in that** a cooling pipe (10, 21, 22) is an extruded pipe.

6. A generator according to claim 4 or 5, **characterised in that** a cooling pipe (10, 21, 22) comprises an inner wall (13, 23) separating the inlet circuit and the outlet circuit.

7. A wind turbine, comprising a generator according to any of claims 1 to 6.

## Patentansprüche

1. Generator (1), insbesondere für eine Windturbine, welcher einen Außenrotor (2) mit einer Anzahl von Permanentmagneten (3), die in Umfangsrichtung angeordnet sind, und einen Innenstator (4) mit einem Statorblechpaket (5) und einem Kühlungsmittel umfasst, wobei der Stator (4) mit einem Flüssigkeitskühlungsmittel versehen ist, **dadurch gekennzeichnet, dass** das Statorblechpaket (5) in zwei Teile geteilt ist, zwischen denen ein zentraler Luftkanal (9), der Kühlrohre (10, 21, 22) des Flüssigkeitskühlungsmittels aufnimmt, vorgesehen ist, wobei diese Kühlrohre (10, 21, 22) in dem Statorblechpaket (5) von dem zentralen Luftkanal (9) zu den Fingerplatten (12) des Stators verlaufen, welche sie seitlich begrenzen, und wobei Einlass- und Auslassteile der Kühlrohre in dem zentralen Luftkanal (9) angeordnet sind, von welchem aus sie sich radial erstrecken, um mit einem zentralen Einlass (17) und mit einem zentralen Auslass (18) des Flüssigkeitskühlungsmittels verbunden zu werden.

2. Generator nach Anspruch 1, **dadurch gekennzeichnet, dass** Kühlrohre (10, 21) abwechselnd in dem zentralen Luftkanal (9) angeordnet sind, derart, dass ein Kühlrohr, welches von dem zentralen Luftkanal zu der linken Seite des Stators verläuft, neben einem Kühlrohr angeordnet ist, welches zu der rechten Seite des Stators verläuft.

3. Generator nach Anspruch 1 oder 2, **dadurch gekennzeichnet, dass** Kühlrohre (10, 21) versetzt angeordnet sind, sodass Kühlrohre (10, 21), welche zu der linken Seite des Stators verlaufen, und Kühlrohre (10, 21), welche zu der rechten Seite des Stators verlaufen, einander in dem Luftkanal (9) axial überlappen.

4. Generator nach einem der vorhergehenden Ansprüche, **dadurch gekennzeichnet, dass** ein Kühlrohr (10, 21, 22) einen Einlasskreis und einen Auslasskreis umfasst.

5. Generator nach Anspruch 4, **dadurch gekennzeichnet, dass** ein Kühlrohr (10, 21, 22) ein extrudiertes Rohr ist.

6. Generator nach Anspruch 4 oder 5, **dadurch gekennzeichnet, dass** ein Kühlrohr (10, 21, 22) eine Innenwand (13, 23) umfasst, welche den Einlasskreis und den Auslasskreis trennt.

7. Windturbine, welche einen Generator nach einem der Ansprüche 1 bis 6 umfasst.

## Revendications

1. Générateur (1), notamment pour une éolienne, comprenant un rotor extérieur (2) avec un nombre d'aimants permanents (3) agencés dans une direction circonférentielle et un stator intérieur (4) avec un laminage de stator (5) et un moyen de refroidissement, dans lequel le stator (4) est pourvu d'un moyen de refroidissement de liquide, **caractérisé en ce que** le laminage de stator (5) est divisé en deux parties entre lesquelles est prévu un conduit d'air central (9) recevant des tuyaux de refroidissement (10, 21, 22) du moyen de refroidissement de liquide, dans lequel lesdits tuyaux de refroidissement (10, 21, 22) passent dans le laminage de stator (5), partant du conduit d'air central (9) et s'étendant vers des plaques à doigt (12) du stator qui les limitent latéralement, et dans lequel des parties d'entrée et de sortie des tuyaux de refroidissement sont disposées dans le conduit d'air central (9) à partir duquel elles s'étendent radialement pour être raccordées à une entrée centrale (17) et à une sortie centrale (18) du moyen de refroidissement de liquide.

2. Générateur selon la revendication 1, **caractérisé en ce que** des tuyaux de refroidissement (10, 21) sont agencés en alternance dans le conduit d'air central (9), de manière à ce qu'un tuyau de refroidissement qui part du conduit d'air central et s'étend vers le côté gauche du stator soit disposé près d'un tuyau de refroidissement qui s'étend vers le côté droit du stator.

3. Générateur selon la revendication 1 ou 2, **caractérisé en ce que** les tuyaux de refroidissement (10, 21) sont étagés de telle sorte les tuyaux de refroidissement (10, 21) qui partent vers le côté gauche du stator et les tuyaux de refroidissement (10, 21) qui partent vers le côté droit du stator sont superposés axialement dans le conduit d'air (9).

4. Générateur selon l'une quelconque des revendications précédentes, **caractérisé en ce qu'**un tuyau de refroidissement (10, 21, 22) comprend un circuit d'entrée et un circuit de sortie.

5. Générateur selon la revendication 4, **caractérisé en ce qu'**un tuyau de refroidissement (10, 21, 22) est un tuyau extrudé.

6. Générateur selon la revendication 4 ou 5, **caractérisé en ce qu'**un tuyau de refroidissement (10, 21, 22) comprend une paroi intérieure (13, 23) séparant le circuit d'entrée et le circuit de sortie.

7. Eolienne comprenant un générateur selon l'une quelconque des revendications 1 à 6.
